# EUROPEAN PATENT SPECIFICATION

(11) **EP 1 450 537 B1**
(45) Date of publication and mention of the grant of the patent: **26.03.2008**
(21) Application number: 04001857.4
(22) Date of filing: 28.01.2004
(51) Int. Cl.: H04L 29/06, G06F 9/46, H04L 12/56, G06F 9/00

(54) **System and method for integrating multiserver platforms**
Vorrichtung und Verfahren zur Integration von Mehrserverplattformen
Système et procédé pour intégrer des plates-formes multiserveur

(30) Priority: 18.02.2003 US 448656 P; 21.03.2003 US 456831 P; 28.03.2003 US 458719 P; 15.04.2003 US 463014 P
(43) Date of publication of application: 25.08.2004
(73) Proprietor: Broadcom Corporation, Irvine, CA 92617 (US)
(72) Inventor: Lund, Martin, Menlo Park, CA 95025 (US)
(74) Representative: Jehle, Volker Armin

(56) References cited:
- US-A1- 2002 188 718
- US-A1- 2003 030 988

## Description

### FIELD OF THE INVENTION

Certain embodiments of the invention relate to communication among servers. More specifically, certain embodiments of the invention relate to a method and system for integrating multiserver platforms.

### BACKGROUND OF THE INVENTION

A server may be a computer system in a network that may be accessed by one or more users and/or other computers. The server may provide, for example, access to information such as files, and to services such as communications, printing or other types of services that may be available through a network. In some cases, a special network operating system (OS) may run on a dedicated server, for example, in a large network. A personal computer (PC) operating system may run on a non-dedicated server having, for example, peer-to-peer networking software running thereon.

Generally, a server may have one or more advanced or more powerful central processing units (CPUs), a larger memory, a larger cache and more storage space than a typical single user workstation or personal computer. The server may include, for example, multiple processors which may be dedicated to a particular service or provide a particular function such as e-mail handling, printing or communications. The server may also include devices such as, large power supplies, backup power capabilities such as an uninterruptible power supply (UPS) and various fault tolerant or redundant features such as redundant array of independent disks (RAID) technologies.

A single server may exist in a standalone enclosure and may interface with a network via one or more network interfaces. Multiple standalone boxes may be situated in a central computing center with each standalone box coupled to a network via a respective cable. Each server may interface to the network separately at a particular data rate such as, for example, approximately 1 gigabits/second (Gb/s) for a Gigabit Ethernet or approximately 10 Gb/s for a 10 Gigabit Ethernet.

Thus, the single server in a standalone enclosure may inefficiently utilize large amounts of space and/or power. Furthermore, since each single server may be connected to the network directly via a respective cable, a room full of servers might be overflowing with cables possibly necessitating detailed cable maps which may be quite time-intensive and costly to produce. In addition, single servers in a standalone enclosure may not be easily replaced during failure, particularly when there may be multiple failures. Consequently, the conventional single server in a standalone box may ultimately suffer from a substantial total cost of ownership (TCO).

Further limitations and disadvantages of conventional and traditional approaches will become apparent to one of skill in the art, through comparison of such systems with some aspects of the present invention as set forth in the remainder of the present application with reference to the drawings.

US 2003/030988 A1 discloses a midplane which provides connectivity among a plurality of server blades and a combined switch and service processor.

Also US 2002/188718 A1 discloses a midplane including a communication bus to couple server processing cards and network interface cards.

### BRIEF SUMMARY OF THE INVENTION

Certain embodiments of the invention provide a method and system for communicating information in a server platform. Aspects of the method for communicating information in a server platform may include receiving at least one packet from a first switch blade associated with a first multiserver platform comprising at least a first server blade. The method may also include determining a second server blade associated with a second multiserver platform that may receive at least a portion of the received packet. In this regard, at least a portion of the received packet may be routed to the second blade server. A backplane of the first multiserver platform and the first switch blade, which is part of the backplane, provide connectivity between the at least one first server blade and a network. The packet may be received by a second switch blade and/or a central switch. In instances where the packet may be received by the central switch, at least a portion of the received packet may be communicated to the second switch blade via at least one communication link that may couple the central switch directly to the second switch blade. The routed portion of the received packet may be processed by the second blade server.

Aspects of the system for processing information in a multiserver platform may include a first multiserver platform having a network interface and/or a first switch blade. At least a second multiserver platform comprising a second switch blade may be coupled to the first switch blade of the first multiserver platform. A third multiserver platform comprising a third switch blade may be coupled to the second switch blade of the second multiserver platform and/or the first switch blade of the first multiserver platform. The first multiserver platform, the second multiserver platform and the third multiserver platform may be coupled in a daisy-chain configuration. In this regard, the first multiserver platform and the third multiserver platform may communicate via the second multiserver platform.

In another embodiment of the invention, at least one central switch may be coupled to the first switch blade of the first multiserver platform and the second switch blade of the second multiserver platform. At least a third switch blade of a third multiserver platform may also be coupled to the central switch. The first multiserver platform, second multiserver platform and third multiserver platform may communicate via the central switch.

According to another aspect of the invention, a method for communicating information in a server platform, the method comprises:
receiving at least one packet from a first switch blade associated with a first multiserver platform comprising at least a first server blade;
determining at least a second server blade associated with a second multiserver platform for receiving at least a portion of said received at least one packet; and
routing at least a portion of said at least one received packet to at least said second server blade. A backplane of the first multiserver platform and the first switch blade, which is part of the backplane, provide connectivity between the at least one first server blade and a network.

Advantageously, said receiving further comprises receiving said at least one packet by a second switch blade and a central switch.

Advantageously, said at least one packet is received by said central switch, communicating said at least a portion of said at least one received packet to at least said second switch blade via at least one communication link that couples said central switch directly to said at least said second switch blade.

Advantageously, the method further comprises processing said routed at least a portion of said at least one received packet by said at least said second blade server.

According to another aspect of the invention, a system for communicating information in a server platform, the system comprises:
a first multiserver platform comprising at least a first server blade and at least one of a network interface and a first switch blade; and
at least a second multiserver platform comprising a second switch blade coupled said first switch blade of said first multiserver platform.

A backplane of the first multiserver platform and the first switch blade, which is part of the backplane, provide connectivity between the at least one first server blade and a network. Advantageously, the system further comprises at least a third multiserver platform comprising a third switch blade coupled to at least one of said second switch blade of said second multiserver platform and said first switch blade of said first multiserver platform.

Advantageously, said first multiserver platform, said second multiserver platform and said third multiserver are coupled in a daisy-chain configuration.

Advantageously, said first multiserver platform, and said third multiserver platform communicate via said second multiserver platform.

Advantageously, the system further comprises at least one central switch coupled to at least said first switch blade of said first multiserver platform and said second switch blade of said second multiserver platform.

Advantageously, the system further comprises at least a third switch blade of a third multiserver platform coupled to said at least one central switch.

Advantageously, said first multiserver platform, said second multiserver platform and said third multiserver platform communicate via said central switch.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram of an embodiment of a multiserver platform in accordance with an embodiment of the invention.

FIG. 2 is a block diagram illustrating an embodiment of a communication system including a multiserver platform and an external network in accordance with various aspects of the invention.

FIG. 3 is a block diagram illustrating an embodiment of a communication system including an external network and N multiserver platforms coupled in a daisy-chain configuration in accordance with an embodiment of the invention.

FIG. 4 is a block diagram illustrating the coupling of two switch blades in accordance with an embodiment of the invention.

FIG. 5 is a flowchart illustrating exemplary steps for providing communication within the daisy-chain configuration of FIG. 3 in accordance with an embodiment of the invention.

FIG. 6 is a block diagram illustrating an exemplary central switch configuration for the multiserver platform of FIG. 1, in accordance with various aspects of the invention.

FIG. 7 is a flowchart illustrating exemplary steps for providing communication in the central switch configuration of FIG. 6 in accordance with an embodiment of the invention.

### DETAILED DESCRIPTION OF THE INVENTION

Certain embodiments of the invention provide a method and system for communicating information in a server platform. Aspects of the method for communicating information in a multiserver platform may include receiving at least one packet from a first switch blade associated with a first multiserver platform. Another aspect of the method may include determining a second server blade associated with a second multiserver platform that may receive at least a portion of the received packet. In this regard, at least a portion of the received packet may subsequently be routed to the second blade server and the routed portion of the received packet processed by the second blade server. In another aspect of the invention, the packet may be received by a third switch blade and/or a central switch. Accordingly, in instances where the packet may be received by the central switch, at least a portion of the received packet may be communicated to the second switch blade via one or more communication links that may be utilized to couple the central switch directly to the second switch blade.

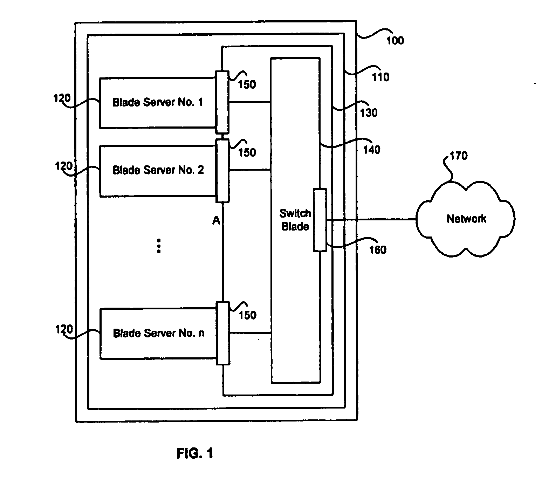

FIG. 1 is a block diagram of an embodiment of a multiserver platform 100 in accordance with an embodiment of the invention. The multiserver platform 100 may include a chassis 110, a backplane 130, a switch blade 140, blade server interfaces 150, and a plurality of blade servers No. 1, No. 2, ..., No. n, collectively referenced as 120.

The chassis 110 may include the backplane'130. However, although only one backplane 130 is shown, the invention is not so limited and a plurality of backplanes may be provided within the chassis 110. In this regard, one or more backplanes may be coupled together. In a case where the chassis 110 may include a single backplane, the backplane may be regarded as a common backplane, which may provide connectivity for the blade servers 120. The chassis 110 may be part of a single installation enclosure that includes a plurality of blade server slots which may be adapted for receiving one or more of the blade servers 120.

The backplane 130 may include, for example, one or more blade server interfaces collectively referenced as 150, which may be referred to as blade server interconnects. In this regard, the chassis 110 may include a plurality of blade server slots that may be adapted to facilitate connection between the blade servers and the blade server interfaces 150. In other words, the blade server slots may provide a conduit for coupling the blade servers 120 to the blade server interfaces 150. The backplane 130 may also include one or more interfaces such as a network interface 160. The network interface 160 may be referred to as network interconnect.

The switch blade 140 may be part of the backplane 130. In this regard, the switch blade 140 may be integrated within the backplane 130 or it may be a plug-in card that may be plugged into the backplane 130.

The blade servers 120 may be coupled to the backplane 130 via the blade server interfaces 150. Each of the blade servers 120 may therefore be coupled to a corresponding one of the server interfaces 150. For example, each of the blade servers 120 may be plugged into or removably mounted in a corresponding blade server slot in the chassis 110 so that it interfaces with a corresponding one of the server interfaces. In this regard, the blade servers 120 may be coupled to the backplane 130.

Once the blade servers 120 are mounted or plugged into the chassis 110, the blade servers 120 may be coupled to the switch blade 140 of the backplane 130 via the blade server interfaces 150. The backplane 130 may be adapted to provide connectivity, for example, between two or more of the blade servers 120. Furthermore, the backplane 130 and/or the switch blades 140 may provide connectivity between the one or more of the blade servers 120 and the network 170.

The network interface 160 facilitates connectivity between the backplane 130 and the network 170. In this regard, the network interface 160 may couple backplane 130 and/or one or more of the plurality of switch blades 140 to the network 170.

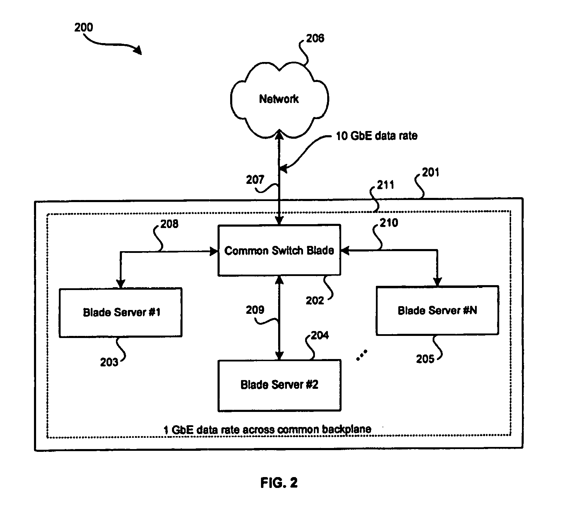

FIG. 2 is a block diagram illustrating an embodiment of a communication system 200 including a multiserver platform 201 and an external network 206, in accordance with various aspects of the invention. The multiserver platform 201 may include a chassis having a common backplane 211, a common switch-blade 202 and a plurality of blade servers including, a blade server #1 203, a blade server #2 204, ..., blade server #N 205, where N may be any integer number.

Each of the blade servers #1, #2, ..., #N may be a server that has been integrated on a single plug-in card or blade that may be plugged into a blade server slot of the chassis with the common backplane 211. The chassis with a common backplane 211 may provide a single installation enclosure for the multiple blade servers #1, #2, .., #N.

The chassis with the common backplane 211 may also serve a common interface between each blade server 203, 204, 205 and the common switch blade 202. For example, common backplane 211 may provide a common backplane interface 208 between blade server #1 203 and the common switch blade 202. Common backplane 211 may also provide a common backplane interface 209 between blade server #2 204 and the common switch blade 202. Finally, common backplane 211 may provide a common backplane interface 210 between blade server #N 205 and the common switch blade 202. In this regard, the common backplane interfaces 208, 209, 210 are part of the common backplane 211.

The common switch blade 202 may include N+1 interfaces and at least a portion of these interfaces may be adapted to perform packet switching of data frames between the N blade servers and the external network 206, in accordance with an embodiment of the invention. The common switch-blade may include intelligence that may manage and distribute data traffic to the relevant blade servers including blade server #1, #2, ..., #N. The common switch-blade 202 may interface with each of the N blade servers via the common backplane 211. The common switch-blade 202 may also interface with the external network 206, thereby resulting in N+1 interfaces.

In accordance with an embodiment of the invention, the external network 206 may include a 10 Gigabit Ethernet network connection and interface. The external interface 207 between the common switch blade 202 and the external network 206 may include a 10 Gigabit Ethernet (GbE) interface, operating at a data rate of 10 Gb/s. In this regard, bi-directional network communication capability may be provided between the external network 206 and the common switch blade 202. In order to facilitate Gigabit Ethernet communication, the common backplane 211 may include a plurality of Gigabit Ethernet (GbE) interfaces. The switch blade 202 may communicate with each of the N blade servers independently over the common backplane 211 at a data rate of 1 Gb/s. For example, the blade server #1 203 may communicate in a bi-directional manner with the common switch-blade 202 via the common backplane interface 208. The blade server #2 204 may also communicate in a bi-directional manner with the common switch blade 202 via the common backplane interface 209. Finally, the blade server #N 105 may communicate in a bi-directional manner with the common switch blade 202 via the common backplane interface 210.

In accordance with an embodiment of the invention, the common switch blade 202 may have the capability to handle communication with the multiple blade servers 203, 204, 205 at the same time. In this regard, the common blade server 202 may facilitate the simultaneous transfer of information between any of the blade servers 203, 204, 205.

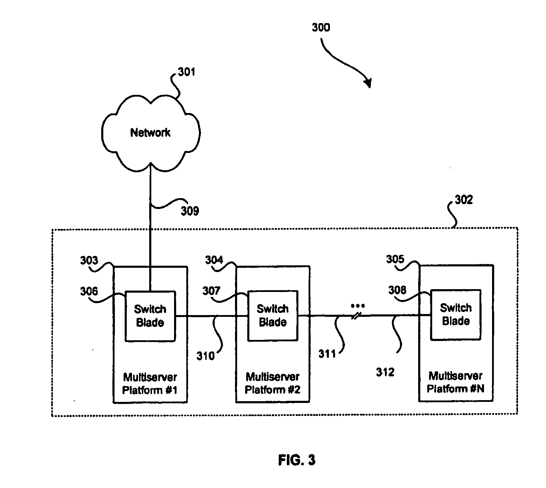

FIG. 3 is a block diagram illustrating an embodiment of a communication system 300 including an external network 301 and N multiserver platforms coupled in a daisy-chain configuration in accordance with an embodiment of the invention. The daisy-chain configuration includes N multiserver platforms referenced as 303, 304, ..., 305 and labeled as multiserver platform #1, multiserver platform #2, ..., multiserver platform #N, respectively. Referring to FIG. 3, the multiserver platform #1 303 may include a common switch blade 306. The multiserver platform #2 304 may include a common switch blade 307 and the multiserver platform #N 305 includes a common switch blade 308.

The external network 301 may interface with the switch blade 306 of the multiserver platform #1 303 via, for example, a high speed communication link 309. The multiserver platform #1, multiserver platform #2, ..., multiserver platforms #N referenced as 303, 305, ..., 305 may be coupled together in a daisy-chained arrangement via, for example, high speed communication links. For example, the switch blade 306 of the multiserver platform #1 303 may interface with the switch blade 307 of the multiserver platform #3 via a high speed communication link 310. The switch blade 307 of the multiserver platform #2 304 may also interface with the switch blade of another multiserver platform via a high speed communication link 311. The switch blade 308 of the multiserver platform #N 305 may also interface with the switch blade of some other multiserver platform via a high speed communication link 312.

The high speed communication links 309, 310, 311, ..., 312 may be bi-directional communication links although the invention is not so limited. In accordance with an embodiment of the invention, the high speed communication links may be of the order of 1- 10 Gigabit per second or higher and may be Ethernet links. Notwithstanding, the high speed communication links may be fibre channel links or other type of communication link, for example. Also, in accordance with an embodiment of the invention, the switch blades 306, 307, ..., 308 of the multiserver platforms may be adapted to simultaneously communicate with each other via the high speed communication links. Similarly, the switch blade 306 may be adapted to communicate with the external network 301 and the switch blade 307 at the same time over the high speed communication links 309 and 310. In this regard, information may be simultaneously transferred by the switch blades 306, 307, ..., 308 among the multiserver platforms 303, 304, ..., 305 and the external network 30. The data communication rate between any of the multiserver platforms 303, 304, .., 305 may be any standard or non-standard data rate, in accordance with various embodiments of the invention.

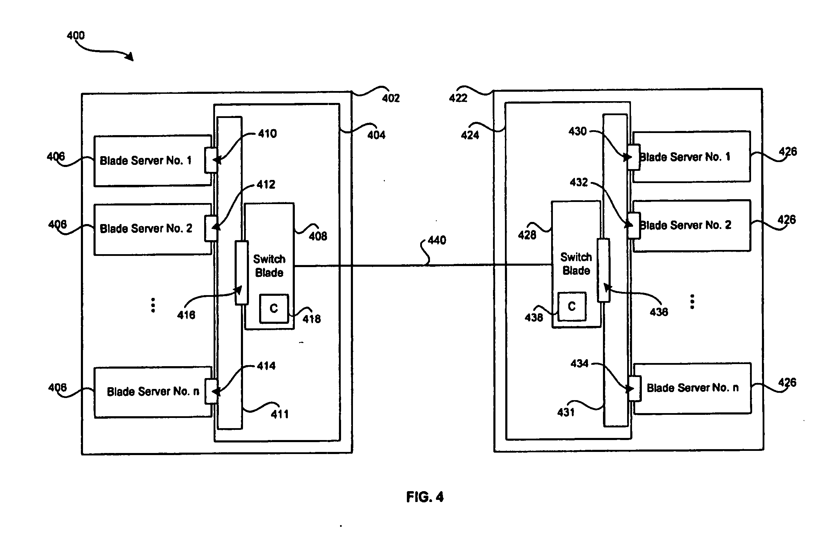

FIG. 4 is a block diagram illustrating the coupling of two switch blades in accordance with an embodiment of the invention. Referring to FIG. 4, there is shown a first multiserver platform 402 coupled to a second multiserver platform 422. In this regard, reference 402 may include an enclosure or chassis of the first multiserver platform 402 and reference 422 may include an enclosure or chassis of the multiserver platform 422. Notwithstanding, the first multiserver platform 402 may include a backplane 404, a plurality of n blade servers collectively referred to as 406, a switch blade 408 and a bus 411. Also shown are bus transceivers 410, 412, 414, 416 and a controller 418. Each of the bus transceivers 410, 412, 414, 416 may include at least one transmitter that may transmit electrical signals onto the bus 411 within the backplane 404. Each of the bus transceivers 410, 412, 414, 416 may also include at least one receiver that may receive electrical signals onto the bus 411 within the backplane 404. The bus 411 may be a time division multiplexed (TDM) bus, a frequency division multiplexed (FDM) bus, or any other suitable type of bus. Accordingly, the bus transceivers 410, 412, 414, 416 may be suitable time division multiplexed bus transceivers and/or frequency division multiplexed bus transceivers, for example. As communication link 440 may couple the first multiserver platform 402 to the second multiserver platform 422. The communication link 440 may be similar to the communication links that couple the multiserver platform #1, multiserver platform #2, ..., multiserver platform #N referenced as 303, 304, ..., 305 in the daisy-chain arrangement of FIG. 3.

Each of the blade servers 406 and the switch blade 408 of the first multiserver platform 402 may include a bus transceiver that may be coupled to the bus 411. In this regard, blade server No. 1 includes a bus transceiver 410, server blade No. 2 includes a bus transceiver 412, and server blade No. n includes a bus transceiver 414. The switch blade 408 may also include a bus transceiver 416 and a bus controller 418. Although the bus controller 418 is illustrated as a separate entity within the switch blade 408, the invention is not so limited. Accordingly, one or more functions provided by the bus controller 418 may be provided by the switch blade 408. In a case where all of the functions offered by the bus controller may be provided by the switch blade, this may eliminate a need for an additional bus processing entity such as the bus controller 418.

Notwithstanding, the bus controller 418 and/or the switch blade 408 of the first multiserver platform 402 may be adapted to control the transfer of messages between the blade servers 406 and the switch blade 408. In this regard, the bus controller 418 may handle functions such as bus access and bus arbitration. The bus controller 418 and/or the switch blade 408 may also provide a switching function that may permit messages to be transferred among the blade servers 406 via the switch blade and from an external source such as the network 170 (FIG. 1) to any one or more of the blade servers 406. For example, one or more messages received from the network 170 may be steered by the switch blade 408 to one or more of the blade servers 406 based on a message type and a function provided by one or more of the blade servers 406.

The bus controller 418 and/or the switch blade 408 of the first multiserver platform 402 may include suitable hardware and/or software that may be adapted to control, for example, bus access, bus arbitration and/or switching among the blade servers 406 and the switch blade 408. The hardware and/or software may therefore control the manner in which messages may be received from a first blade server and transferred, routed or switched to a second blade server via the switch blade 408.

The second multiserver platform 422 may include a backplane 424, a plurality of n blade servers collectively referred to as 426, a switch blade 428 and a bus 431. Also shown are bus transceivers 430, 432, 434, 436 and a controller 438. Each of the bus transceivers 430, 432, 434, 436 may include at least one transmitter that may transmit electrical signals onto the bus 431 within the backplane 424. Each of the bus transceivers 430, 432, 434, 436 may also include at least one receiver that may receive electrical signals onto the bus 431 within the backplane 424. The bus 431 may be a time division multiplexed (TDM) bus, a frequency division multiplexed (FDM) bus, or any other suitable type of bus. Accordingly, the bus transceivers 430, 432, 434, 436 may be suitable time division multiplexed bus transceivers and/or frequency division multiplexed bus transceivers, for example.

Each of the blade servers 426 and the switch blade 428 of the second multiserver platform 422 may include a bus transceiver that may be coupled to the bus 431. In this regard, blade server No. 1 includes a bus transceiver 430, server blade No. 2 includes a bus transceiver 432, and server blade No. n includes a bus transceiver 434. The switch blade 428 may also include a bus transceiver 436 and a bus controller 438. Although the bus controller 438 is illustrated as a separate entity within the switch blade 438, the invention is not so limited. Accordingly, one or more functions provided by the bus controller 438 may provided by the switch blade 428. In a case where all of the functions offered by the bus controller may be provided by the switch blade, this may eliminate a need for an additional bus processing entity such as the bus controller 438.

Notwithstanding, the bus controller 438 and/or the switch blade 428 of the second multiserver platform 422 may be adapted to control the transfer of messages between the blade servers 426 and the switch blade 428. In this regard, the bus controller 438 may handle functions such as bus access and bus arbitration. The bus controller 438 and/or the switch blade 428 may also provide a switching function that may permit messages to be transferred among the blade servers 426 via the switch blade and from an external source such as the network 170 (FIG. 1) to any one or more of the blade servers 426. For example, one or more messages received from the network 170 may be steered by the switch blade 428 to one or more of the blade servers 426 based on a message type and a function provided by one or more of the blade servers 426.

The bus controller 438 and/or the switch blade 428 of the second multiserver platform 422 may include suitable hardware and/or software that may be adapted to control, for example, bus access, bus arbitration and/or switching among the blade servers 426 and the switch blade 428. The hardware and/or software may therefore control the manner in which messages may be received from a first blade server and transferred, routed or switched to a second blade server via the switch blade 428.

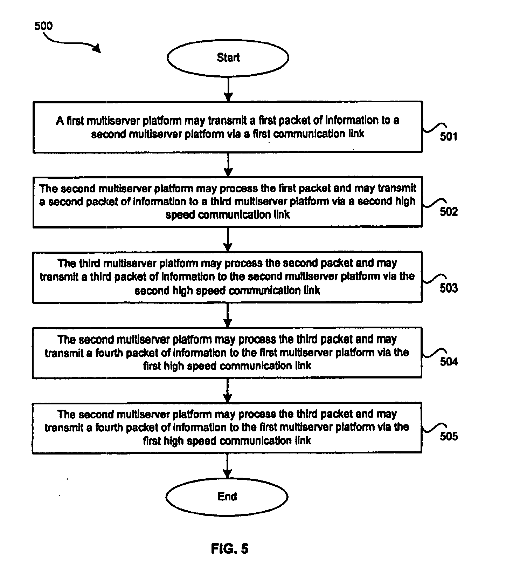

FIG. 5 is a flowchart 500 illustrating exemplary steps for providing communication within the daisy-chain configuration 302 of FIG. 3 in accordance with an embodiment of the invention. Referring to FIG. 5, in step 501, a first multiserver platform may transmit a first packet of information to a second multiserver platform via a first high speed communication link. In step 502, the second multiserver platform may process the first packet and transmit a second packet of information to a third multiserver platform via a second high speed communication link. In step 503, the third multiserver platform may process the second packet and transmit a third packet of information to the second multiserver platform via the second high speed communication link. In step 504, the second multiserver platform may process the third packet and transmit a fourth packet of information to the first multiserver platform via the first high speed communication link. In step 505, the first multiserver platform may process the fourth packet and transmit a fifth packet of information over an external network via a third high speed communication link.

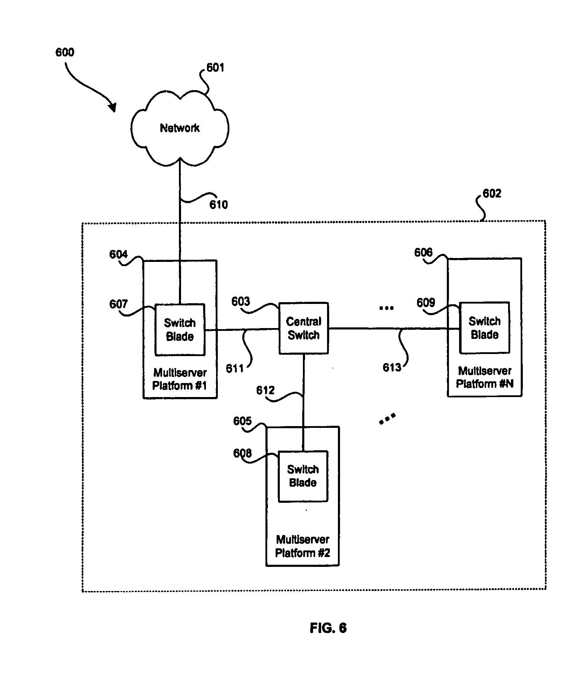

FIG. 6 is a block diagram 600 illustrating an exemplary central switch configuration 602 for the multiserver platform of FIG. 1, in accordance with various aspects of the invention. The central switch configuration 602 may include a central switch, a switching element or a switch 603, a multiserver platform #1 604, a multiserver platform #2 605, up to and including a multiserver platform #N 606. The multiserver platform #1 604 may include a common switch blade or switch blade 607. The multiserver platform #2 605 may include a switch blade 608 and the multiserver platform #N 606 may include a switch blade 609.

The external network 601 may interface with the switch blade 607 of the multiserver platform #1 604 via a high speed communication link 610. The multiserver platform #1 404 may be coupled to the central switch 603 via a high speed communication link 611. The multiserver platform #2 605 may be coupled to the central switch 603 via the high speed link 612 and in a similar manner, the multiserver platform #N 606 may be coupled to the central switch 603 via the high speed communication link 613. In this regard, the switch blade 607 of the multiserver platform #1 404 may interface with the central switch 603 via the high speed communication link 611. The switch blade 608 of the multiserver platform #2 605 may connect with the central switch 603 via the high speed communication link 612. In a similar manner, the switch blade 609 of the multiserver platform #N 606 may connect to the central switch 603 via the high speed communication link 613.

In operation, the central switch may coordinate the high speed switching or routing of packets among the various multiserver platforms 604, 605, ..., 606. One advantage of the central switch configuration of FIG. 6 over the daisy-chain configuration of FIG. 3 is that, in the central switch configuration of FIG. 6, a packet may be transmitted from any given multiserver platform 604, 605, ..., 606, through the central switch 603, to any other multiserver platform. In the daisy-chain configuration or arrangement, a packet of data may have to be passed through a plurality of intermediate multiserver platforms in order to be transferred to from a source platform to a destination platform.

The high speed communication links 610, 611, 612, 613 may be bi-directional communication links. In accordance with an embodiment of the invention, the high speed communication links may be links of the order of 1-10 Gigabits per second. Notwithstanding, these links may be Ethernet links or fibre channel links. Also, in accordance with an embodiment of the invention, the switch blades 607, 608, 609 of the multiserver platforms 604, 605, 606 may have the capability to simultaneously communicate with the central switch 603 via the high speed communication links 611, 612, ..., 613. Similarly, the switch blade 607 may also have the capability to communicate with the external network 601 and the central switch 603 at the same time over the high speed communication links 610 and 611. The data communication rate between any of the multiserver platforms 604, 605, ..., 606 and the central switch 403 may be any standard or non-standard data rate, in accordance with various embodiments of the invention.

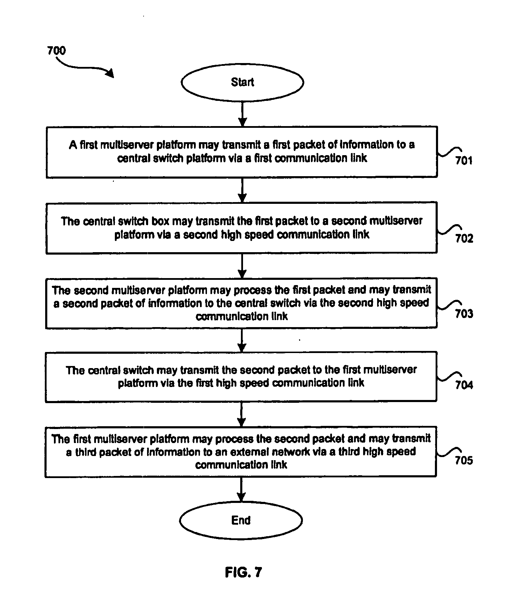

FIG. 7 is a flowchart 700 illustrating exemplary steps for providing communication in the central switch configuration of FIG. 6 in accordance with an embodiment of the invention. Referring to FIG. 7, in step 701, a first multiserver platform may transmit a first packet of information to a central switch via a first high speed communication link. In step 702, the central switch may transmit the first packet to a second multiserver platform via a second high speed communication link. In step 703, the second multiserver platform may process the first packet and may transmit a second packet of information to the central switch via the second high speed communication link. In step 704, the central switch may transmit the second packet to the first multiserver platform via the first high speed communication link. In step 705, the first multiserver platform may process the second packet and may transmit a third packet of information over an external network via a third high speed communication link.

In accordance with various embodiments of the invention, the multiserver platforms may communicate data and/or control information among each other via one or more high speed communication links that may be coupled to the switch blades of the multiserver platforms and/or the central switch where present. The control information may include pertinent information related the multiserver platforms. For example, some control information may indicate the blade server associated with a particular multiserver platform from which a particular packet may have originated. Other exemplary information may include synchronization information, security information, and provisioning and security.

In accordance with another embodiment of the invention, any one or more of the multiserver platforms may each provide a plurality of server functions. Alternatively, each of the multiserver platforms may be dedicated to providing a different, specific server function. Notwithstanding, the configurations of FIG. 3 and FIG. 6 may provide blade server scalability by utilizing at least two multiserver platforms to increase server performance and/or system capacity, for example. In this regard, multiserver platforms may be added or removed to facilitate increased and decreased traffic, respectively.

Aspects of the invention provide a method and system for inter-platform blade server integration using a plurality of multiserver platforms. The configurations of FIG. 3 and FIG. 6, for example, may provide blade server scalability using a plurality of multiserver platforms to increase server performance and/or system capacity. In this regard, by integrating a plurality of multiserver platforms, a larger virtual server platform is effectively created.

In particular, for example, aspects of the system for processing information in a server platform may include a first multiserver platform 303 (FIG. 3) having at least one network interface 309 and/or a first switch blade 306. At least a second multiserver platform 304 comprising a second switch blade 307 may be coupled to the first switch blade 306 of the first multiserver platform 303. A third multiserver platform 305 comprising a third switch blade 308 may be coupled to the second switch blade 304 of the second multiserver platform 307 and/or the first switch blade 306 of the first multiserver platform 303. The first multiserver platform 303, the second multiserver platform 304 and the third multiserver platform 305 may be coupled in a daisy-chain configuration. In this regard, the first multiserver platform 303 and the third multiserver platform 305 may communicate via the second multiserver platform 304.

In another embodiment of the invention, for example, at least one central switch 603 (FIG. 6) may be coupled to the first switch blade 607 of the first multiserver platform 604 and the second switch blade 608 of the second multiserver platform 605. At least a third switch blade 609 of a third multiserver platform 606 may also be coupled to the central switch 603. The first multiserver platform 604, second multiserver platform 605 and third multiserver platform 606 may communicate via the central switch 603.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communicating information in a server platform (300, 600), the method comprising:
receiving at least one packet from a first switch blade (306, 607) associated with a first multiserver platform (303, 604) comprising at least a first server blade;
determining at least a second server blade associated with a second multiserver platform (304, 605) for receiving at least a portion of said received at least one packet; and
routing at least a portion of said at least one received packet to at least said second server blade,
**characterized in that**
a backplane of the first multiserver platform (303, 604) and the first switch blade (306, 607), which is part of the backplane, provide connectivity between the at least one first server blade and a network (301, 601).

2. The method according to claim 1, wherein said receiving further comprises receiving said at least one packet by a second switch blade (608) and a central switch (603).

3. The method according to claim 2, further comprising if said at least one packet is received by said central switch (603), communicating said at least a portion of said at least one received packet to at least said second switch blade (608) via at least one communication link (612) that couples said central switch (603) directly to said at least said second switch blade (608).

4. The method according to claim 1, further comprising processing said routed at least a portion of said at least one received packet by said at least said second blade server.

5. A system for communicating information in a server platform, the system comprising:
a first multiserver platform (303, 604) comprising at least a first server blade and at least one of a network interface and a first switch blade (306, 607); and
at least a second multiserver platform (304, 605) comprising a second switch blade (307, 608) coupled said first switch blade (306, 607) of said first multiserver platform (303, 604),
**characterized in that**
a backplane of the first multiserver platform (303, 604) and the first switch blade (306, 607), which is part of the backplane, provide connectivity between the at least one first server blade and a network (301, 601).

6. The system according to claim 5, further comprising at least a third multiserver platform (305, 606) comprising a third switch blade (308, 609) coupled to at least one of said second switch blade (307, 608) of said second multiserver platform (304, 605) and said first switch blade (306, 607) of said first multiserver platform (303, 604).

## Patentansprüche

1. Verfahren zum Kommunizieren von Informationen in einer Server-Plattform (300, 600), wobei das Verfahren Folgendes umfasst:
Empfangen wenigstens eines Pakets von einem ersten Switch Blade (306, 607), das mit einer ersten Multiserver-Plattform (303, 604) assoziiert ist, die wenigstens ein erstes Server Blade enthält;
Bestimmen wenigstens eines zweiten Server Blade, das mit einer zweiten Multiserver-Plattform (304, 605) assoziiert ist, zum Empfangen wenigstens eines Teils des empfangenen wenigstens einen Pakets; und
Routen wenigstens eines Teils des wenigstens einen empfangenen Pakets zu wenigstens dem zweiten Server Blade,
**dadurch gekennzeichnet, dass**
eine Backplane der ersten Multiserver-Plattform (303, 604) und das erste Switch Blade (306, 607), das Teil der Backplane ist, eine Konnektivität zwischen dem wenigstens einen ersten Server Blade und einem Netzwerk (301, 601) bereitstellen.

2. Verfahren nach Anspruch 1, wobei das Empfangen des Weiteren das Empfangen des wenigstens einen Pakets durch ein zweites Switch Blade (608) und einem zentralen Switch (603) umfasst.

3. Verfahren nach Anspruch 2, das des Weiteren dann, wenn das wenigstens eine Paket von dem zentralen Switch (603) empfangen ist, das Kommunizieren des wenigstens einen Teils des wenigstens einen empfangenen Pakets zu wenigstens dem zweiten Switch Blade (608) über wenigstens eine Kommunikationsverbindung (612) umfasst, die den zentralen Switch (603) direkt mit wenigstens dem zweiten Switch Blade (608) koppelt.

4. Verfahren nach Anspruch 1, das des Weiteren das Verarbeiten des gerouteten wenigstens einen Teils des wenigstens einen empfangenen Pakets durch wenigstens den zweiten Blade Server umfasst.

5. System zum Kommunizieren von Informationen in einer Server-Plattform, wobei das System Folgendes umfasst:
eine erste Multiserver-Plattform (303, 604), die wenigstens ein erstes Server Blade und wenigstens eines von einer Netzwerkschnittstelle und
einem ersten Switch Blade (306, 607) umfasst; und
wenigstens eine zweite Multiserver-Plattform (304, 605), die ein zweites Switch Blade (307, 608) umfasst, das mit dem ersten Switch Blade (306, 607) der ersten Multiserver-Plattform (303, 604) gekoppelt ist,
**dadurch gekennzeichnet, dass**
eine Backplane der ersten Multiserver-Plattform (303, 604) und das erste Switch Blade (306, 607), das Teil der Backplane ist, eine Konnektivität zwischen dem wenigstens einen ersten Server Blade und einem Netzwerk (301, 601) bereitstellen.

6. System nach Anspruch 5, das des Weiteren wenigstens eine dritte Multiserver-Plattform (305, 606) umfasst, die ein drittes Switch Blade (308, 609) umfasst, das mit wenigstens einem des zweiten Switch Blade (307, 608) der zweiten Multiserver-Plattform (304, 605) und des ersten Switch Blade (306, 607) der ersten Multiserver-Plattform (303, 604) gekoppelt ist.

## Revendications

1. Procédé pour communiquer des informations dans une plate-forme de serveurs (300, 600), le procédé comprenant les étapes suivantes :
réception d'au moins un paquet d'une première lame de commutateur (306, 607) associée à une première plate-forme multiserveur (303, 604) comprenant au moins un premier serveur lame ;
détermination d'au moins un second serveur lame associé à une deuxième plate-forme multiserveur (304, 605) pour recevoir au moins une partie dudit au moins un paquet reçu ; et
routage d'au moins une partie dudit au moins un paquet reçu vers au moins ledit second serveur lame,
**caractérisé en ce que**
un fond de panier de la première plate-forme multiserveur (303, 604) et la première lame de commutateur (306, 607), qui fait partie du fond de panier, fournissent la connectivité entre ledit au moins un premier serveur lame et un réseau (301, 601).

2. Procédé selon la revendication 1, dans lequel ladite réception comprend en outre la réception dudit au moins un paquet par une deuxième lame de commutateur (608) et un commutateur central (603).

3. Procédé selon la revendication 2, comprenant en outre si ledit au moins un paquet est reçu par ledit commutateur central (603), la communication de ladite au moins une partie dudit au moins un paquet reçu à au moins ladite deuxième lame de commutateur (608) via au moins une liaison de communication (612) qui couple ledit commutateur central (603) directement à ladite au moins dite deuxième lame de commutateur (608).

4. Procédé selon la revendication 1, comprenant en outre le traitement de ladite au moins une partie routée dudit au moins un paquet reçu par ledit au moins dit second serveur lame.

5. Système pour communiquer des informations dans une plate-forme de serveurs, le système comprenant :
une première plate-forme multiserveur (303, 604) comprenant au moins un premier serveur lame et au moins une entre une interface réseau et une première lame de commutateur (306, 607) ; et
au moins une deuxième plate-forme multiserveur (304, 605) comprenant une deuxième lame de commutateur (307, 608) couplée à ladite première lame de commutateur (306, 607) de ladite première plate-forme multiserveur (303, 604),
**caractérisé en ce que**
un fond de panier de la première plate-forme multiserveur (303, 604) et la première lame de commutateur (306, 607), qui fait partie du fond de panier, fournissent la connectivité entre ledit au moins un premier serveur lame et un réseau (301, 601).

6. Système selon la revendication 5, comprenant en outre au moins une troisième plate-forme multiserveur (305, 606) comprenant une troisième lame de commutateur (308, 609) couplée à au moins une entre ladite deuxième lame de commutateur (307, 608) de ladite deuxième plate-forme multiserveur (304, 605) et ladite première lame de commutateur (306, 607) de ladite première plate-forme multiserveur (303, 604).
